# EUROPEAN PATENT SPECIFICATION

(11) **EP 1 824 925 B1**
(45) Date of publication and mention of the grant of the patent: **05.10.2011**
(21) Application number: 05824008.6
(22) Date of filing: 17.11.2005
(51) Int. Cl.: C08L 23/02

(54) **POLYMER CONTAINING POLYSILOXANE PROCESSING AID AND CATALYST NEUTRALIZER**
POLYMER MIT POLYSILOXAN-VERARBEITUNGSHILFSMITTEL UND KATALYSATORNEUTRALISATIONSMITTEL
POLYMERE CONTENANT UN AUXILIAIRE DE TRAITEMENT AU POLYSILOXANE ET UN NEUTRALISANT CATALYTIQUE

(30) Priority: 07.12.2004 US 633869 P
(43) Date of publication of application: 29.08.2007
(73) Proprietor: Dow Global Technologies LLC, Midland, MI 48674 (US)
(72) Inventor: HO, Thoi, H., Lake Jackson, TX 77566 (US); LAKEMAN, Pascal, E.R.E.J., NL-4530AA Terneuzen (NL); LEE, Robin, J., Lake Jackson, TX 77566 (US); WEVERS, Ronald, NL - 4533 RD - Terneuzen (NL)
(74) Representative: Hayes, Adrian Chetwynd
(86) International application number: PCT/US2005/041744
(87) International publication number: WO 2006/062718

(56) References cited:
- EP-A- 0 722 981
- WO-A-03/055920
- GB-A- 1 460 128
- US-A- 5 003 023
- US-A- 5 708 084
- US-A- 5 708 085

## Description

### BACKGROUND OF THE INVENTION

This invention relates to olefin polymers comprising an interactive diorganopolysiloxane processing aid and a cationic polyalkoxylate catalyst neutralizer. Such polymers possess improved melt rheology properties, especially reduced pressure differential under melt extrusion conditions.

Olefin polymers such as polyethylene and polypropylene are often produced by use of a transition metal polymerization catalyst thereby leaving small amounts of catalyst residues in the polymer. Such residues are typically deactivated or neutralized to reduce color body formation by homogeneously incorporating a small quantity of a neutralizing compound into the polymer. This is normally accomplished by mixing the additive with the polymer while in a molten state or a polymer stream exiting a polymerization reactor.

WO-03/O55920 disclosed the use of cationic derivatives of poly(oxyalkylene) compounds for use as catalyst neutralizers for olefin polymers. Examples included alkali metal-, alkaline earth metal-, and ammonium- derivatives of poly(oxyalkylene) compounds, especially potassium alkoxylate salts of mixed poly(oxyalkylene) compounds. Preferred neutralizers had number average molecular weights of from 1000 to 3000 amu.

In U.S. Patent Number 4,740,341 a blend of a linear ethylene polymer, a fluoropolymer and a polysiloxane having improved extrusion properties was disclosed. In U.S. Patent Number 5,708,085 there are disclosed certain interactive polymeric siloxanes, especially diorganopolysiloxane compounds containing functional groups such as hydroxyl-, carboxylic acid-, nitrogen-, or vinyl- groups that, when incorporated into olefin polymers, especially low density polyethylenes, improved the melt processing properties of the olefin polymer. Preferred processing additives had molecular weights from 100,000 to 1,000,000 amu. It was speculated that the presence of the functional groups in the diorganopolysiloxane rendered the compound more hydrophobic and allowed the compound to migrate to the surface of metal extrusion equipment and dies, resulting in products having improved surface hydrophobicity. The resulting polymers generally possess reduced melt fracture and extruder torque, improved mold fill and release, and improved lubricity and surface scratch resistance due to incorporation of the diorganopolysiloxane compound. Disadvantageously however, the foregoing migration proclivity of such compounds can also lead to increased plate-out onto the metal surfaces of extrusion equipment during melt processing operations. This can lead to increased need to periodically clean or otherwise remove accumulated quantities of residues from the surfaces of molds and extrusion equipment.

Accordingly, despite the advance in the art occasioned by the foregoing polymer blends, further improvement in polymer processing properties is desired. In particular, the attainment of equivalent or improved polymer performance with reduced quantities of processing additives is desired. The use of reduced quantities of diorganopolysiloxane compound in order to achieve a reduction or elimination of plate-out and to attain reduced additive costs is highly desired.

### SUMMARY OF THE INVENTION

The present invention provides a polymeric composition having improved melt extrusion properties comprising:
A) an olefin polymer;
B) a catalyst neutralizer comprising a cationic derivative of a poly(oxyalkylene) compound; and
C) a processing aid comprising an interactive diorganopolysiloxane compound containing hydroxyl-, carboxylic acid-, di(C₁₋₂₀ hydrocarbyl)amino-, or C₂₋₁₀ alkenyl- functional groups.

Due to the presence of the cationic derivative of a poly(oxyalkylene) compound in the foregoing polymeric composition, it has been discovered that reduced quantities of the interactive diorganopolysiloxane compound can be employed without significant loss of processing properties, and under some processing conditions, an improvement in processing properties is observed. In addition to reducing the cost of the resulting polymeric composition through reduction of interactive diorganopolysiloxane compound usage, the resulting composition is characterized by reduced incidence of plate-out and reduced interference of the poly(oxyalkylene) compound with the processing aid.

### BRIEF DESCRIPTION OF THE DRAWING

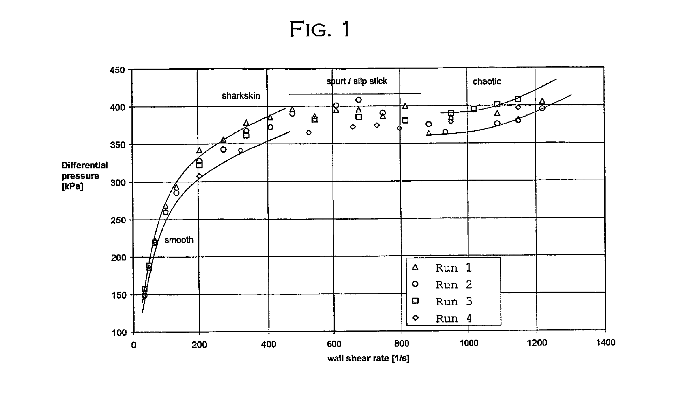

Figure 1 is a graph of differential pressure versus apparent wall shear rate for the resins tested in Example 1.

### DETAILED DESCRIPTION OF THE INVENTION

Unless stated to the contrary, implicit from the context, or customary in the art, all parts and percents are based on weight.

If appearing herein, the term "comprising" and derivatives thereof is not intended to exclude the presence of any additional component, step or procedure, whether or not the same is disclosed herein. In order to avoid any doubt, all compositions claimed herein through use of the term "comprising" may include any additional additive, adjuvant, or compound, unless stated to the contrary. In contrast, the term, "consisting essentially of" if appearing herein, excludes from the scope of any succeeding recitation any other component, step or procedure, excepting those that are not essential to operability. The term "consisting of", if used, excludes any component, step or procedure not specifically delineated or listed. The term "or", unless stated otherwise, refers to the listed members individually as well as in any combination.

### COMPONENT A)

Olefin polymers for use herein include any polymer formed by addition polymerization of one or more olefins, especially homopolymers and interpolymers of one or more C₂₋₁₀ α-olefins. Examples include homopolymers of ethylene, propylene, 1-butene or 4-methyl-1-pentene; interpolymers of ethylene with one or more C₃₋₁₀ α-olefins or styrene; interpolymers of two or more C₃₋₁₀ α-olefins; interpolymers of ethylene, one or more C₃₋₁₀ α-olefins and optionally styrene or a C₄₋₂₀ diolefin; and interpolymers of one or more C₃₋₁₀ α-olefins with styrene, a C₄₋₂₀ diolefin or a mixture of styrene with a C₄₋₂₀ α-olefin. Suitable interpolymers include block or random copolymers containing multiple monomer remnants in each polymer chain; graft copolymers containing polymer segments of one or more monomers pendant from a separately prepared polymer; and copolymer blends containing mixtures of individual polymer components, such as blends comprising a matrix of a relatively crystalline polymer component with occlusions or domains of a relatively rubbery polymer or homogeneous blends of two or more olefin polymers.

Preferred olefin polymers for use herein as component A) are isotactic polypropylene, low density polyethylene (LDPE), linear low density polyethylene (LLDPE), and high density polyethylene (HDPE). Highly preferred olefin polymers are LLDPE resins made by copolymerizing ethylene with one or more C₃₋₁₀ α-olefins, especially 1-butene, 1-hexene or 1-octene by use of a transition metal containing catalyst. Preferably, the polymers used as component A) have a density from 0.85 to 0.98 g/cc, more preferably from 0.87 to 0.95 g/cc, and a weight average molecular weight (Mw) from 60,000 to 200,000.

Highly preferred olefin polymers are prepared by use of a catalyst comprising one or more transition metal derivatives and a cocatalyst or activator. Suitable transition metals are metals from groups 3-10 of Periodic Table of Elements. Examples of suitable compounds include titanium halides, vanadium halides, and vanadium oxyhalides or oxides, such as chromium trioxide, and molybdenum trioxide. Also mixed oxy halides, hydrocarbyloxides, mixed halides and hydrocarbyloxides are advantageously used. As the cocatalyst or activator, there may be employed an organic aluminum compound such as trialkyl aluminum, dialkyl aluminum chloride, mixed orgaonaluminum-magnesium complexes or polymeric or oligomeric aluminum oxyalkoxides, such as methylalumoxane.

Suitable catalysts include both Ziegler-Natta catalysts and Phillips-type catalysts as well as complexes containing a transition metal having at least one delocalized π-electron containing ligand or electron donor ligand. Suitable compounds include metallocenes, half metallocenes, constrained geometry catalysts, single site catalysts, and donor complexes, the synthesis and use of which are well known to the skilled artisan.

Preferably, the olefin polymers employed in the present invention are prepared by use of a catalyst composition comprising halogen, a transition metal of Groups 3-6 of the Periodic Table of Elements, and optionally magnesium and/or an alkoxide; and an organoaluminum cocatalyst, specifically a Ziegler-Natta or Phillips type catalyst.

### COMPONENT B)

Suitable cationic derivatives of poly(oxyalkylene) compounds are those compounds resulting from the base catalyzed polymerization of one or more alkylene oxides, preferably ethylene oxide (EO), propylene oxide (PO) and/or butylene oxide (BO) with a monovalent or polyvalent reactive proton group containing initiator compound. If more than one alkylene oxide is used in the preparation of the additive composition, such alkylene oxides may be reacted simultaneously or sequentially, resulting in randomly distributed or sequentially distributed alkyleneoxy groups. By sequential reaction of different alkylene oxides, blocks of the different units will be present. When a different alkylene oxide is added at the end of the reaction of another alkylene oxide, a so-called capped or tapered poly(alkyleneoxy) compound is obtained. Depending on the quantity of initial alkylene oxide remaining in the reactor when the capping monomer is added, the resulting polymer sequence may be essentially homopolymeric or copolymeric in nature.

Preferred compounds are selected from cationic derivatives of poly(oxyalkylene) compounds and polyester polyols corresponding to the formula:

A[(OR¹)ₓOX]_{y},

where
A is the residue of an initiator having one or more active hydrogen atoms;
y is a number from 1 to 10;
R¹ independently each occurrence can be the same or different, and is selected from the group consisting of C₂₋₄ alkylene, preferably 1,2-ethylene, 1,2-propylene or 1,2-butylene;
x is the number from 1 to 1000, preferably from 5 to 500 and most preferably from 10 to 300; and
X is a cation.

Preferred initiator compounds include water, ammonia, or an organic compound comprising one or more substituents selected from the group consisting of OH, SH, COOH, COSH, CSSH, NHR^{a} wherein R^{a} is hydrogen or a hydrocarbyl group of up to 50 carbon atoms. The initiator compound and R^{a} may contain saturated or unsaturated, linear or branched, aliphatic, aromatic or cycloaliphatic groups. Monomeric and polymeric initiators may be used. Preferred initiators are water, alcohols, alkylene glycols, alkyleneglycol monoethers, poly(oxyalkylene) glycol compounds, polycaprolactam polyols, and poly(oxyalkylene) glycol monoethers. A most preferred intiator compound is water, ethylene glycol or propylene glycol.

The number of cations in the additive composition will depend on the functionality of the initiator molecule, the number of reactive protons remaining after polymerization of the alkylene oxide with the initiator compound, and the degree of neutralization with a base. Preferably an initiator compound having a functionality from 1 to 10, more preferably 1 or 2 is employed. Preferred cations are alkali metal cations, especially potassium or sodium. Alternatively, ammonium cations of the formula [R^{b}₄N]⁺ wherein R^{b} independently each occurrence is hydrogen or a hydrocarbyl group of from 1 to 25 carbon atoms, preferably an alkyl group of from 1 to 18 carbon atoms, more preferably of 1-10 carbon atoms may be utilized.

Preferred cationic derivatives of poly(oxyalkylene) compounds for use herein are monopotassium- or dipotassium- poly(alkyleneoxy)alkoaylates containing ethyleneoxy,propyleneoxy-, or butyleneoxy- repeat units or mixtures thereof, and having number average molecular weights from 500 to 5,000, more preferably from 1,000 to 2,500. Highly desirably, the catalyst neutralizer comprises at least 50 to 99 weight percent of propyleneoxy- or butyleneoxyunits, more preferably from 60 to 98 weight percent thereof and capped with from 50 to 1 weight percent of ethylene oxide derived units, preferably from 40 to 2 weight percent ethylene oxide derived units.

The cationic poly(oxyalkylene) derivative may be employed in the neutralization of catalyst residues and byproducts in olefin polymers as a neat compound, as a mixture of neat compounds, or as a mixture with additional compounds, especially neutral alkylene glycol and poly(oxyalkylene) compounds or mixtures thereof, hydrocarbon diluents, or conventional catalyst neutralizers or deactivators. In one embodiment, the cataionic poly(oxyalkylene) derivative may be substituted for some or all of a conventional catalyst termination agent, such as water, CO₂, or an alcohol in a polymerization process.

The quantity of catalyst neutralizer incorporated into the polymer composition of the invention is an amount sufficient to achieve catalyst neutralization as well as improved extrusion properties in the resulting composition. One measure of such improvement includes delaying the onset of melt defects in extruded polymers to higher extrusion shear rates than could be achieved in the absence of the catalyst neutralizer, or by permitting the extruder to equilibrate and produce melt-defect-free extrudate in less time than would be required for a comparative polymer composition lacking in catalyst neutralizer at the same extrusion conditions. This permits the use of less diorganopolysiloxane additive as well as the use of higher extruder throughputs and shorter extruder start up times, resulting in more economical extrusion operation. Desirably the olefin polymer composition contains at least 0.01 weight percent, preferably at least 0.02 weight percent, most preferably at least 0.05 weight percent of the cationic derivative of a poly(oxyalkylene) compound, and at most 5 weight percent, most preferably at most 2.5 weight percent, based on total composition weight.

### COMPONENT C)

The interactive diorganopolysiloxane, preferably is a hydroxyl group functionalized diorganosiloxane containing one or two hydroxyl functional groups. Highly preferably the function groups are attached to the terminal diorganosiloxane unit of the compound. Preferred compounds are hydroxyl-functionalized di(C₁₋₄alkyl)polysiloxanes, more preferably terminal hydroxyl- functionalized dimethylpolysiloxanes containing one or two hydroxyl groups per molecule. Highly preferred compounds are those having a number average molecular weight (Mn) from 40,000 to 1,000,000, more highly preferably from 50,000 to 750,000, and most preferably from 60,000 to 500,000.

The quantity of interactive diorganopolysiloxane employed in the composition may vary according to the degree of process benefit desired. The diorganopolysiloxane is present in an amount of from 0-01 to 1% based on the total composition 6 weight.

Beneficially according to the invention, reduced quantities of the interactive diorganopolysioxane may be employed, while still obtaining beneficial polymer properties.

The method by which the respective additive compositions are incorporated into the polymer is not critical to successful practice. In one embodiment, the catalyst neutralizer may be added at the end of the polymerization zone or downstream from the polymerization zone. The reaction mixture emerging from the polymerization reactor or zone after completion of polymerization may contain the olefin polymer, unaltered monomers, the polymerization catalyst a part of which may still be active, and optionally inert hydrocarbon diluents and/or a catalyst terminating agent. Suitable catalyst terminating agents include water, alcohols, CO₂ and CO.

The catalyst neutralizer may be simply mixed with the polymer stream by combining the neutralizer either in neat form or as a solution in an inert diluent with the polymer stream before or after devolitilization. Preferably, the catalyst neutralizer is added to the polymer stream after termination of the catalyst and before the polymer, and optional diluent, are subjected to separation steps to remove unreacted monomer or solvent. Such removal is typically done while increasing the temperature or decreasing the pressure, or both, to flash off the monomer and diluent. There can be one or two or more of such separation steps in sequence. In a solution polymerization process or in a high temperature high-pressure polymerization process, the polymer, catalysts residues and catalyst neutralizer remain within the molten polymer stream, whereas the unreacted monomers, diluent and other gases are removed therefrom.

Because of the ease of incorporating additives into polymer streams prior to devolatilization and the avoidance of subsequent remelting of the polymer to incorporate additives by melt compounding, the interactive diorganopolysiloxane may also be added to the polymer stream at the same time or nearly the same time as addition of component B), that is, prior to devolatilization and recovery of the resulting polymer product. Alternatively, both component A) and component B) may be subsequently incorporated into the olefin polymer by well known melt compounding techniques, including use of a masterbatch of either component, wherein a polymer carrier containing the additive or additives in concentrated form is blended with the polymer to be treated and the resulting mixture melted and thoroughly mixed prior to pelletization or extrusion into shaped articles.

The resultant olefin polymer may also comprise conventional additives such as stabilizers, UV-absorbers, antistatic agents, antiblocking agents, lubricants, pigments, inorganic or organic fillers, fire-retardant compounds, anti-drip agents, or additional polymers such as rubbers or fluorinated polymers, especially fluoroelastomers, optionally in combination with an interfacial agent such as a poly(oxyalkylene) polymer.

The polymers as obtained according to the present invention are suitable for many types of applications, including those that require excellent optical properties and high stretch ratios, such as fiber spinning applications, injection molding, blow molding, rotomolding, and blown or cast film applications.

The invention is further illustrated by the following example that should not be regarded as limiting of the present invention. Unless stated to the contrary or conventional in the art, all parts and percents are based on weight.

### EXAMPLES

Relative averaged molecular weight of the catalyst neutralizer compound is determined by gel permeation chromatography (GPC). 50 microliters of a sample solution (150 mg sample into 10 ml THF) is introduced onto the GPC column (filled with porous-particle column packing PL-Gel (5 µm); columns in series filled with PS/DVB of 50x10⁻¹⁰m (50), 100 x 10⁻¹⁰m (100) 500x10⁻¹⁰m, (500) and 1000X10⁻¹⁰m (1000 Å) (30 cm each)). THF is used as eluent at a flow rate of 1 ml/min. The columnbox is maintained at a temperature of 35 °C. A Waters DRI 410™ differential refractometer is used as the detector.

Melt index of the olefin polymer is determined according to ASTM-D-1238 Procedure A, Condition B at 190°C/2.16 kg.

The content of potassium in the catalyst neutralizer is calculated by a standard acid-base titration method. The additive composition sample is dissolved in 2-propanol and titrated with hydrochloric acid to the desired equivalence point. The content of potassium may also be measured by Flame photometry AOD-S method.

OH determination of the catalyst neutralizer is measured by titration according ASTM D-4274D.

### EXAMPLE 1

750 gram of difunctional dipropylene glycol initiator and 430.6 gram KOH, 45 percent in water solution, are charged into a stainless steel 10 liter reactor, which is then flushed with nitrogen, heated up to 115°C, and the water flashed off at 3.0 kPa for 3 hours. After flashing, the initiator contained 0.77 percent water and 7.76 percent KOH. 9608 grams of propylene oxide are added over 5.5 hours at 125°C and 300-400 kPa, and digested for 3 hour at 125°C. 724 grams of ethylene oxide is added over 0.5 hours at 125°C, 200-300 kPa, and maintained for 5 hours at 125°C. After cooling to 40°C, the contents of the reactor are discharged into a steel container under nitrogen atmosphere. The resulting product (referred to as KAO) has a molecular weight of 1800, ethylene oxide content of 7 percent and potassium content of 1 percent.

An ethylene /1-octene polymer is prepared in two continuous stirred tank reactors (CSTR's) of 5 liters volume each operated in series. The reactors are equipped with a shell to keep the reactor volume at adiabatic conditions. The feed to the first reactor comprises a mixture of C₈₋₁₀ n-alkane containing 20 percent ethylene which is charged at a rate of 30 kg/hr. The temperature of the solvent/ethylene feed is 15 °C and the pressure is maintained at 3.5 MPa. 1-Octene is added as a separate stream into the first reactor. By an additional separate stream, fresh solvent, a Ziegler-Natta procatalyst comprising a suspension of a MgCl₂ supported TiCl₄ in the same n-alkane mixture is injected into the first reactor at a rate of about 0.01 g Ti/hr. The procatalyst is prepared essentially according to the procedure of US-4,547,475 and contains Mg/Cl/Al/Ti in the mole ratios 13/35/4/1. Together with the procatalyst, triethylaluminum cocatalyst is fed in an amount of 3.5 mole of Al per mole of Ti. During the subsequent polymerization of the ethylene/octene mixture, approximately 80 percent of the ethylene is converted and the reactor temperature increases to 180 °C. The reaction mixture comprising dissolved polymer enters into the second reactor where approximately 10 percent additional ethylene is converted, increasing the reaction temperature to 200 °C at a pressure of 3.5 MPar. About 5.2 kg polymer per hour is so formed having a melt index of 3.0 and a density of 0.914 g/cm³ and containing about 12 percent polymerized 1-octene.

After the product stream containing polymer, monomer, solvent and catalyst leaves the second reactor, 20 parts per million by weight (ppm) of water, based on polymer loading, are injected prior to an in-line static mixer. The water is dosed to provide 1000 ppm water in the polymer stream at 4.0 MPa and 150 °C. After allowing the water to react with the catalyst residue for 10 seconds, 0.2 percent of either KAO or calcium stearate catalyst neutralizer composition is added as a 10 weight percent solution in mixed C₈₋₁₀ alkanes solvent. Hindered phenol antioxidant (Irganox™ 1010 from Ciba Geigy Corporation) and phosphorus stabilizer (Irgafos™ 168, also from Ciba-Geigy Corporation) are added to the polymer streams at 500 ppm and 1200 ppm respectively.

The product streams comprising polymer, solvent, ethylene, 1-octene, inactivated catalyst, additives, or their reaction products or residues is devolatilized in a two stage devolatilization process. The resulting molten polymer streams then pass through a melt forming die and cutter, and is cooled in a water bath to give solid pellets. Samples of the two resins are compounded with a commercially available polyethylene resin concentrate containing ultrahigh molecular weight, hydroxyl terminated, dimethylpolysiloxane (MB 50-314, available from Dow Coming Corporation) having a number average molecular weight of about 400,000 (DMSO). A twin screw extruder is employed to melt compound polymer samples containing various amounts of the respective additives. A total of four resins are prepared for evaluation in a melt extrusion test (spurt/slip stick extrusion test). Details of the resins tested are located in Table 2. Results are graphically represented in Figure 1.

**Table 2**

| **Run** | **Catalyst neutralizer (ppm)** | **DMSO (ppm)** |
|---|---|---|
| 1* | Calcium Stearate (1200) | 500 |
| 2* | Calcium Stearate (1200) | 1000 |
| 3 | KAO (1400) | 500 |
| 4 | KAO (1400) | 1000 |

| | | |
|---|---|---|
| * Comparative, not an example of the invention | | |

In the evaluation, differential pressure versus apparent wall shear rate is measured. The resulting "S" curve may be divided into four regions based on extrudate appearance and surface distortion, referred to as "smooth", "sharkskin", "spurt/slip stick", and "chaotic" employing the nomenclature and definitions of C. F. J. Den Doelder, "Design and Implementation of Polymer Melt Fracture Models", Proefontwerp, Eindhoven University of Technology, Eindhoven, (1999) and J. Non-Newtonian Fluid Mech., 79, 503-514 (1998). In figure 1, the various regions of the curve are labeled using this naming convention. As seen in figure 1, the KOA neutralized polymer blend curves (Runs 3 and 4) show a distinct difference compared to the reference resins (Runs 1 and 2). The differential die pressures are significantly lower in both the sharkskin and, less significantly, in the spurt slip stick regime, for the resins of Runs 3 and 4 compared to Runs 1 and 2. In addition, the width of the spurt/slip-stick regime is narrower in both bandwith and oscillation level for runs 3 and 4 compared to runs 1 and 2 (not illustrated). Based on these results, it is believed that KAO catalyst neutralizer interferes less with the interactive dimethylpolysiloxane polymer processing aid than does a conventional catalyst neutralizer, exemplified by calcium stearate.

## Claims

1. A polymeric composition comprising:
A) an olefin polymer;
B) 0.01 to 5 weight % of a catalyst neutralizer comprising a cationic derivative of a poly(oxyalkylene) compound; and
C) a processing aid comprising a diorganopolysiloxane compound containing hydroxyl-, carboxylic acid-, di(C₁₋₂₀ hydrocarbyl)amino-, or C₂₋₁₀ alkenyl- functional groups in an amount of from 0.01 to 1% based on the total composition weight.

2. The composition according to claim 1 wherein the olefin polymer is selected from the group consisting of isotactic polypropylene, low density polyethylene (LDPE), linear low density polyethylene (LLDPE), and high density polyethylane (HDPE).

3. The composition according to claim 1 wherein olefin polymer is a copolymer of ethylene with one or more C₃₋₁₀ α-olefins prepared by use of a transition metal containing catalyst composition.

4. The composition according to claim 3 wherein the catalyst composition comprises halogen, a transition metal of Groups 3-6 of the Periodic Table of Elements, and optionally magnesium and/or an alkoxide; and an organoaluminum cocatalyst.

5. The composition according to any one of claims 1-4 wherein Component B) comprises a monopotassium or dipotassium poly(alkyleneoxy)alkoxylate containing ethyleneoxy-, propyleneoxy-, or butyleneoxy- repeat units or mixtures thereof and having a number average molecular weight from 500 to 5,000.

6. The composition accoding to claim 5 comprising 0.01 to 5 percent of monopotassium or dipotassium poly(alkyleneoxy)alkoxylate based on total composition weight.

7. The composition according to any one of claim 1-4 wherein Component C) comprises an hydroxyl-functionalized di(C₁₋₄alkyl)polysiloxane.

8. The composition according to claim 7 wherein Component C) comprises a terminal hydroxyl- functionalized dimethylpolysiloxane containing one or two hydroxyl groups per molecule.

9. The composition according to claim 8 wherein the terminal hydroxyl- functionalized dimethylpolysiloxane has a number average molecular weight (Mn) from 40,000 to 1,000,000.

10. The composition according to claim 5 wherein Component C) comprises an hydroxyl- functionalized di(C₁₋₄alkyl)polysiloxane.

11. The composition according to claim 10 wherein Component C) comprises a terminal hydroxyl-functionalized dimethylpolysiloxane containing one or two hydroxyl groups per molecule.

12. The composition according to claim 11 wherein the terminal hydroxyl-functionalized dimethylpolysiloxane has a number average molecular weight (Mn) from 40,000 to 1,000,000.

13. The composition according to claim 1, wherein Component C) is present in an amount of 0.01 to 0.5% based on the total composition by weight.

## Patentansprüche

1. Polymerzusammensetzung, die Folgendes umfasst:
A) ein Olefinpolymer;
B) 0,01 bis 5 Gew.-% eines Katalysatorneutralisationsmittels, das ein kationisches Derivat einer Poly(oxyalkylen)-Verbindung umfasst; und
C) ein Verarbeitungshilfsmittel, das eine Diorganopolysiloxanverbindung umfasst, die funktionelle Hydroxyl-, Carbonsäure-, Di(C₁₋₂₀-hydrocarbyl)amino- oder C₂₋₁₀-Alkenylgruppen in einer Menge von 0,01 bis 1 % enthält, bezogen auf das Gesamtgewicht der Zusammensetzung.

2. Zusammensetzung nach Anspruch 1, wobei das Olefinpolymer aus der aus isotaktischem Polypropylen, Polyethylen niedriger Dichte (LDPE), linearem Polyethylen niedriger Dichte (LLDPE) und Polyethylen hoher Dichte (HDPE) bestehenden Gruppe ausgewählt ist.

3. Zusammensetzung nach Anspruch 1, wobei das Olefinpolymer ein Copolymer von Ethylen mit einem oder mehreren C₃₋₁₀-α-Olefinen ist, das durch Verwendung einer ein Übergangsmetall enthaltenden Katalysatorzusammensetzung hergestellt ist.

4. Zusammensetzung nach Anspruch 3, wobei die Katalysatorzusammensetzung Halogen, ein Übergangsmetall der Gruppen 3 - 6 des Periodensystems der Elemente und optional Magnesium und/oder ein Alkoxid sowie einen aluminiumorganischen Co-Katalysator umfasst.

5. Zusammensetzung nach einem der Ansprüche 1-4, wobei Komponente B) ein Monokalium- oder Dikalium-poly(alkylenoxy)alkoxylat umfasst, das Ethylenoxy-, Propylenoxy- oder Butylenoxy-Grundeinheiten oder Mischungen davon enthält und ein zahlengemitteltes Molekulargewicht von 500 bis 5.000 besitzt.

6. Zusammensetzung nach Anspruch 5, die 0,01 bis 5 Prozent Monokalium-oder Dikalium-poly(alkylenoxy)alkoxylat umfasst, bezogen auf das Gesamtgewicht der Zusammensetzung.

7. Zusammensetzung nach einem der Ansprüche 1-4, wobei Komponente C) ein hydroxylfunktionalisiertes Di(C₁₋₄-alkyl)polysiloxan umfasst.

8. Zusammensetzung nach Anspruch 7, wobei Komponente C) ein endständiges hydroxylfunktionalisiertes Dimethylpolysiloxan umfasst, das eine oder zwei Hydroxylgruppen pro Molekül enthält.

9. Zusammensetzung nach Anspruch 8, wobei das endständige hydroxylfunktionalisierte Dimethylpolysiloxan ein zahlengemitteltes Molekulargewicht (Mn) von 40.000 bis 1.000.000 besitzt.

10. Zusammensetzung nach Anspruch 5, wobei Komponente C) ein hydroxylfunktionalisiertes Di(C₁₋₄-alkyl)polysiloxan umfasst.

11. Zusammensetzung nach Anspruch 10, wobei Komponente C) ein endständiges hydroxylfunktionalisiertes Dimethylpolysiloxan umfasst, das eine oder zwei Hydroxylgruppen pro Moleküle enthält.

12. Zusammensetzung nach Anspruch 11, wobei das endständige hydroxylfunktionalisierte Dimethylpolysiloxan ein zahlengemitteltes Molekulargewicht (Mn) von 40.000 bis 1.000.000 besitzt.

13. Zusammensetzung nach Anspruch 1, wobei Komponente C) in einer Menge von 0,01 bis 0,5 % vorliegt, bezogen auf das Gesamtgewicht der Zusammensetzung.

## Revendications

1. Composition de polymère, comprenant :
A) un polymère d'oléfine(s),
B) de 0,01 à 5 % en poids d'un agent de neutralisation de catalyseur, comprenant un dérivé cationique d'un composé de type poly(oxyalkylène),
C) et un auxiliaire de traitement, comprenant un composé de type diorgano-polysiloxane qui comporte un ou des groupe(s) fonctionnel(s) hydroxyle, carboxyle, di(hydrocarbyle en C₁₋₂₀)amino ou alcényle en C₂₋₁₀, en une quantité représentant de 0,01 à 1 % du poids total de la composition.

2. Composition conforme à la revendication 1, dans laquelle le polymère d'oléfine(s) est choisi dans l'ensemble constitué par un polypropylène isotactique, un polyéthylène basse densité (PEbd), un polyéthylène basse densité linéaire (PEbdl), et un polyéthylène haute densité (PEhd).

3. Composition conforme à la revendication 1, dans laquelle le polymère d'oléfine(s) est un copolymère d'éthylène et d'une ou plusieurs alpha-oléfine(s) en C₃₋₁₀, préparé à l'aide d'une composition de catalyseur comprenant un métal de transition.

4. Composition conforme à la revendication 3, pour laquelle la composition de catalyseur comprend un halogène, un métal de transition de l'un des groupes 3 à 6 du Tableau Périodique des Eléments, et en option, du magnésium et/ou un alcoxyde, ainsi qu'un co-catalyseur de type organo-aluminium.

5. Composition conforme à l'une des revendications 1 à 4, dans laquelle le composant (B) comprend un poly(alkylène-oxy)alcoxylate de mono-potassium ou de di-potassium, qui comporte des motifs répétés de type éthylène-oxy, propylène-oxy ou butylène-oxy, ou une combinaison de tels motifs, et qui présente une masse molaire moyenne en nombre valant de 500 à 5000.

6. Composition conforme à la revendication 5, qui comprend un poly(alkylène-oxy)alcoxylate de mono-potassium ou de di-potassium en une quantité représentant de 0,01 à 5 % du poids total de la composition.

7. Composition conforme à l'une des revendications 1 à 4, dans laquelle le composant (C) comprend un di(alkyle en C₁₋₄)-polysiloxane à groupe(s) fonctionnel(s) hydroxyle.

8. Composition conforme à la revendication 7, dans laquelle le composant (C) comprend un diméthyl-polysiloxane à groupe(s) fonctionnel(s) hydroxyle terminal ou terminaux, qui comporte un ou deux groupe(s) hydroxyle par molécule.

9. Composition conforme à la revendication 8, dans laquelle le diméthyl-polysiloxane à groupe(s) fonctionnel(s) hydroxyle terminal ou terminaux présente une masse molaire moyenne en nombre (Mn) valant de 40 000 à 1 000 000.

10. Composition conforme à la revendication 5, dans laquelle le composant (C) comprend un di(alkyle en C₁₋₄)-polysiloxane à groupe(s) fonctionnel(s) hydroxyle.

11. Composition conforme à la revendication 10, dans laquelle le composant (C) comprend un diméthyl-polysiloxane à groupe(s) fonctionnel(s) hydroxyle terminal ou terminaux, qui comporte un ou deux groupe(s) hydroxyle par molécule.

12. Composition conforme à la revendication 11, dans laquelle le diméthyl-polysiloxane à groupe(s) fonctionnel(s) hydroxyle terminal ou terminaux présente une masse molaire moyenne en nombre (Mn) valant de 40 000 à 1 000 000.

13. Composition conforme à la revendication 1, dans laquelle le composant (C) se trouve présent en une quantité représentant de 0,01 à 0,5 % du poids total de la composition.
